# EUROPÄISCHE PATENTSCHRIFT

(11) **EP 3 768 563 B1**
(45) Veröffentlichungstag und Bekanntmachung des Hinweises auf die Patenterteilung: **30.06.2021**
(21) Anmeldenummer: 19752152.9
(22) Anmeldetag: 05.08.2019
(51) Int. Cl.: B61C 15/10

(54) **VORRICHTUNG ZUM STREUEN VON GRANULAT**
DEVICE FOR SPREADING GRANULATE
DISPOSITIF D'ÉPANDAGE DE GRANULÉS

(30) Priorität: 06.08.2018 AT 506712018
(43) Veröffentlichungstag der Anmeldung: 27.01.2021
(73) Patentinhaber: Nowe GmbH, 31008 Elze (DE)
(72) Erfinder: REICH, Alexander, 40670 Meerbusch (DE); BARTLING, Werner, 31008 Elze (DE); WEISS, Ralf, 31028 Gronau OT Banteln (DE)
(74) Vertreter: Sonn & Partner Patentanwälte
(86) Internationale Anmeldenummer: PCT/EP2019/070955
(87) Internationale Veröffentlichungsnummer: WO 2020/030559

(56) Entgegenhaltungen:
- EP-A1- 0 656 292
- FR-A- 593 382
- US-A- 1 356 982
- US-A- 2 243 243
- US-A- 2 360 226
- US-A- 2 606 780

## Beschreibung

Die Erfindung betrifft eine Vorrichtung zum Streuen von Granulat, insbesondere zum Streuen von Sand in den Spalt zwischen Schiene und Rad eines Schienenfahrzeuges, mit einem Gehäuse, zumindest einem Zulauf für das Granulat und zumindest einem Auslass für das Granulat, einem axial bewegbaren Dosierkolben mit zumindest einer Bohrung und einem in einer Druckkammer mündenden Druckluftanschluss zur Betätigung des Dosierkolbens mittels Druckluft zur Dosierung des Granulats, wobei eine von der Drucckammer getrennte Förderluftkammer mit einem Druckluftanschluss vorgesehen ist, und die zumindest eine Bohrung im Dosierkolben die Förderluftkammer mit dem zumindest einen Auslass für das Granulat verbindet, sodass das Granulat unabhängig von der Dosierung mittels Druckluft zu dem zumindest einen Auslass förderbar ist.

Insbesondere bei Schienenfahrzeugen ist es üblich, durch Streuen von Granulat, insbesondere Sand, in den Spalt zwischen Schiene und Schienenrad, die Haftreibung zwischen Fahrzeugrad und Schienenkopf für das Anfahren oder einen Bremsvorgang zu erhöhen. Zu diesem Zweck werden derartige Streuvorrichtungen vor den Rädern des Schienenfahrzeuges angeordnet und über die Fahrzeugsteuerung, beispielsweise manuell oder auch automatisiert, angesteuert. Dabei ist es notwendig, eine geeignete Menge an Granulat aus einem dafür vorgesehenen Behälter zu dosieren und über eine entsprechende Förderleitung zum Spalt zwischen Schiene und Rad zu befördern.

Herkömmliche Vorrichtungen zum Streuen von Granulat umfassen daher meist eine entsprechende Dosiereinrichtung und eine davon getrennte Austragseinrichtung. Zum Dosieren einer gewünschten Granulatmenge eignen sich neben elektrisch, elektromagnetisch oder pneumatisch betätigten Kolben auch rotierende Zellenräder.

Die Beförderung des dosierten Granulats über eine Förderleitung zum Spalt zwischen Schiene und Rad erfolgt in der Regel ebenfalls über Druckluft, wie beispielsweise in der AT 403 559 B beschrieben wird.

Eine weitere über Druckluft betriebene Streuvorrichtung ist beispielsweise aus der WO 2008/061650 A1 bekannt geworden.

Die FR 593 382 A beschreibt eine Vorrichtung zum Streuen von Granulat der gegenständlichen Art, wobei die Dosierung und Förderung bzw. Auflockerung des Granulats am Beginn der Förderleitung mit ein und demselben Druckluftstrom erfolgt.

Die EP 656 292 A1 offenbart eine Sandstreuvorrichtung, bei der in sehr aufwändiger Weise eine pneumatische Dosierung und Förderung des Sandes erfolgt.

Eine Vorrichtung zum Streuen von Granulat der gegenständlichen Art ist beispielsweise aus der US 2 243 243 A bekannt geworden.

Die Dosier- und Fördereinrichtungen bekannter Vorrichtungen zum Streuen von Granulat sind häufig relativ groß, weshalb sich derartige Konstruktionen wenig für ein Nachrüsten bestehender Schienenfahrzeuge mit einem beschränkten Platzangebot eignen. Darüber hinaus ist für die Beförderung des dosierten Granulats über größere räumliche Distanzen ein relativ hoher Energieeinsatz bzw. ein hoher Druckluftbedarf erforderlich.

Die Aufgabe der Erfindung besteht in der Schaffung einer oben genannten Vorrichtung zum Streuen von Granulat, welche einen kompakten und platzsparenden Aufbau aufweist, sodass eine Nachrüstung auch bei bestehenden Schienenfahrzeugen mit beschränktem Platzangebot ermöglicht wird. Die gegenständliche Streuvorrichtung soll sich auch durch besonders hohe Effizienz hinsichtlich des erforderlichen Energiebedarfs auszeichnen. Nachteile bekannter Streuvorrichtungen sollen vermieden oder zumindest reduziert werden.

Gelöst wird die erfindungsgemäße Aufgabe dadurch, dass im Dosierkolben mehrere Bohrungen angeordnet sind. Erfindungsgemäß wird durch die Anordnung mehrerer Bohrungen im Dosierkolben die Verteilung der Förderluft verbessert, was zu einem gleichmäßigen Förderstrom und in der Folge zu einer größeren überbrückbaren Förderstrecke bzw. einem geringeren Energieaufwand und Druckluftbedarf führt. Durch die Anordnung einer von der Druckkammer getrennten Förderluftkammer und der zumindest einen Bohrung im Dosierkolben wird eine räumliche und funktionale Integration der Dosier- und Förderfunktion erreicht. Somit ist zur Förderung des dosierten Granulats keine eigene Vorrichtung, beispielsweise ein separater Injektor erforderlich, sondern der Druckluftstrom zur Förderung des Granulats zum Auslass der Streuvorrichtung wird über die Förderluftkammer, die sich hinter dem Dosierkolben befindet, über die zumindest eine Bohrung im Dosierkolben hindurchgeleitet. Der Austritt der Förderluft am vorderen Ende des Dosierkolbens findet räumlich getrennt zum Zulauf für das Granulat, jedoch in unmittelbarer Nähe statt, so dass eine optimale Vermischung von Granulat und Förderluft erfolgt. Dies trägt zu einer besonders effizienten Förderung des Granulats zum gewünschten Ort, in der Regel dem Spalt zwischen Schiene und Rad, bei minimalem Energieeinsatz bei. Im Wesentlichen ist die vorliegende Streuvorrichtung durch eine Kolbendosierung ohne Injektor gekennzeichnet. Der Aufbau der Streuvorrichtung ist besonders platzsparend und kompakt, weshalb sie sich insbesondere für ein Nachrüsten bei Schienenfahrzeugen mit geringem zur Verfügung stehendem Platz eignet. Der kompakte und relativ einfache Aufbau der Streuvorrichtung resultiert auch in einem reduzierten Wartungsaufwand.

Gemäß einem Merkmal der Erfindung sind die Bohrungen im Dosierkolben ringförmig angeordnet. Dies verbessert die Verteilung der Förderluft noch weiter.

Wenn die Bohrungen zur Mittelachse des Dosierkolbens geneigt angeordnet sind, kann eine bessere Förderung des Granulats und eine höhere Beschleunigung erzielt werden. Dabei haben sich Neigungswinkel im Bereich zwischen 1° und 5° als besonders geeignet herausgestellt.

Wenn um jenem Ende des Dosierkolbens, das dem zumindest einen Auslass für das Granulat zugewandt ist, eine mit dem zumindest einen Zulauf für das Granulat verbundene vorzugsweise ringförmige Granulatkammer angeordnet ist, kann ein verbesserter kontinuierlicher Zulauf des Granulats gewährleistet werden. Durch den im Wesentlichen ringförmigen Zulauf des Granulats und die vorzugsweise ringförmige Ausströmung der Druckluft zur Förderung des Granulats kann der Energieeinsatz für die Förderung des Granulats und der Druckluftbedarf weiter reduziert werden, bzw. kann das Granulat über größere Strecken zum gewünschten Ort transportiert werden.

Der zumindest eine Zulauf für das Granulat ist idealerweise geneigt, vorzugsweise um 30° bis 60° geneigt, insbesondere um 45° geneigt angeordnet. Durch eine solche Neigung des Granulatzulaufs kann ein regelmäßiger und kontinuierlicher Zulauf des Granulats erzielt werden.

Wenn das Ende des Dosierkolbens, das dem zumindest einen Auslass für das Granulat zugewandt ist, zugespitzt ausgebildet ist, kann eine bessere Dosierung des Granulats erreicht werden, da durch die Spitze des Endes des Dosierkolbens bei einer Bewegung des Dosierkolbens die Spaltgröße stufenlos variiert werden kann.

Gemäß einem weiteren Merkmal der Erfindung ist eine Feder zum Rückstellen des Dosierkolbens vorgesehen. Dadurch kann auch ohne den Einsatz von Druckluft eine Rückstellung des Dosierkolbens in die Ausgangslage erreicht werden. Als Rückstellfeder dient bevorzugt eine Schraubenfeder, die eine vordefinierte proportional verlaufende Federkennlinie aufweist. Alternativ sind auch Tellerfederpakete mit vergleichbarer Charakteristik vorstellbar. Jedenfalls muss die Kraft der Rückstellfeder eine schnelle und präzise Rückstellung des Dosierkolbens bewirken. Darüber hinaus verhindert die Rückstellfeder bei eventuell auftretendem Druckabfall, ein ungewolltes Auslaufen des Granulats.

Die Feder ist vorzugsweise in einem dichten Federraum angeordnet. Durch die Anordnung eines solchen druckdichten Federraums, in dem die Rückstellfeder angeordnet ist, wird ein Druckpolster gebildet, der die Rückstellung des Dosierkolbens erleichtert.

Wenn in diesem Federraum ein Ventil angeordnet ist, kann eine kontrollierte Rückstellung des Dosierkolbens erfolgen.

Die Trennung zwischen Druckkammer und Förderluftkammer kann durch ein Trennelement mit einer Führung für den Dosierkolben gebildet sein. Die Führung zwischen Trennelement und Dosierkolben kann beispielsweise durch entsprechende Dichtlippen ausgebildet sein.

Zwischen Förderluftkammer und dem zumindest einen Zulauf für das Granulat kann ein Bypass zur Führung eines Teils der zur Förderung des Granulats verwendeten Druckluft zum Zulauf des Granulats angeordnet sein. Durch die Führung eines Teils der verwendeten Druckluft durch einen derartigen Bypass kann ein Unterdruck im Zulauf für das Granulat verhindert werden, der zu einem Zusammenpressen des Granulats und in der Folge zu einer Blockierung der Förderung des Granulats führen könnte. Bereits ein leichter kurzzeitiger Überdruck im Zulauf des Granulats kann das Auftreten eines unerwünschten Unterdrucks und somit Fehldosierungen oder Fehlförderungen verhindern.

Um die im Bypass strömende Druckluft einstellen zu können, ist im Bypass vorzugsweise eine Regulierschraube vorgesehen. Im einfachsten Fall ist die Regulierschraube zur Einstellung der durch den Bypass strömenden Druckluft durch eine Kegelschraube gebildet, welche den Querschnitt des Bypasses entsprechend verändert.

Zwischen Dosierkolben und Gehäuse kann eine Dichtung, vorzugsweise ein O-Ring, angeordnet sein. Eine derartige Dichtung, welche vorzugsweise aus elastischem Material, wie z.B. Gummi gebildet wird, kann sichergestellt werden, dass im Ruhezustand kein Granulat in den Auslass der Streuvorrichtung gelangt.

Der zumindest eine Auslass für das Granulat kann mit einer Förderleitung verbunden sein. Die über einen entsprechenden Flansch oder dgl. am Auslass befestigbare Förderleitung transportiert das dosierte Granulat an die vorgesehene Stelle, insbesondere den Spalt zwischen Rad und Schiene des Schienenfahrzeugs, um die Haftreibung zwischen Rad und Schiene zu erhöhen und ein Anfahren bzw. Abbremsen des Schienenfahrzeugs zu erleichtern.

Gemäß einer Ausführungsvariante ist der Dosierkolben im Wesentlichen horizontal angeordnet und das Gehäuse von unten an einen Behälter für das Granulat anschließbar. Diese Variante eignet sich besonders für ein Nachrüsten der Streuvorrichtung bei bestehenden Fahrzeugen, insbesondere Schienenfahrzeugen, da die Bauhöhe besonders gering ist. Die Streuvorrichtung kann in diesem Fall einfach an einem vorhandenen Granulatbehälter von unten angeschlossen und befestigt werden.

Alternativ dazu kann der Dosierkolben auch im Wesentlichen vertikal und das Gehäuse in einem Behälter für das Granulat angeordnet sein. Diese Variante eignet sich besser bei einer Neukonstruktion eines Schienenfahrzeugs, bei der allenfalls ein größeres Platzangebot für die Unterbringung des Granulatbehälters und dem Dosierkolben besteht.

Gemäß einer Variante der Erfindung sind die Druckluftanschlüsse unter Zwischenschaltung eines Drosselventils an einer gemeinsamen Druckluftleitung angeschlossen. Hier erfolgt die Versorgung der Dosier- und Fördereinrichtung der gegenständlichen Streuvorrichtung über eine gemeinsame Druckluftleitung bzw. einen gemeinsamen Druckluftanschluss. Dieses sog. Einleitungssystem ist insbesondere für einen Arbeitsdruck von 3 bar bis 8 bar max. 10 bar ausgelegt, und eignet sich insbesondere für die Überbrückung kürzerer Förderwege, wie z.B. unterhalb von 1,5 m. Über das Drosselventil oder einem Strömungswiderstand kann der Druck für die Förderung des Granulats gegenüber dem Druck für die Bewegung des Dosierkolbens entsprechend reduziert werden.

Wenn in der Druckluftleitung ein Rückschlagventil angeordnet ist, kann eine sog. Nachblaseffekt bzw. eine Nachblasfunktion zum Freiblasen der Förderleitung nach Beendigung eines Streuvorgangs erzielt bzw. verbessert werden. Nach dem Wegschalten der Druckluftversorgung wird der Dosierkolben in seine Ausgangsstellung zurückbewegt. Die noch vorhandene Druckluft in der Drucckammer gelangt durch das Rückschlagventil über die Druckluftleitung in die Förderluftkammer und transportiert allfällige Ablagerungen von Granulat in der Förderleitung zum Ende der Förderleitung.

Bei einer alternativen Variante sind die Druckluftanschlüsse an zwei unterschiedlichen Druckluftleitungen angeschlossen. Bei dieser Variante werden fahrzeugseitig zwei Druckluftversorgungen zur Verfügung gestellt, welche über zwei unterschiedliche Druckluftleitungen in die Druckkammer bzw. Förderluftkammer transportiert wird. Dieses System ist ebenfalls für einen Arbeitsdruck von 3 bar bis 8 bar bis max. 10 bar ausgelegt, eignet sich jedoch für die Überbrückung größerer Förderwege, beispielsweise bis 15 m.

Wenn in der Druckluftleitung ein Entlüftungsventil angeordnet ist, kann die Rückstellung des Dosierkolbens in die Ausgangslage unterstützt werden.
- Fig. 1: zeigt eine Pinzipdarstellung einer an einem Schienenfahrzeug montierten Vorrichtung zum Streuen von Granulat;
- Fig. 2: zeigt einen Seitenschnitt durch eine Ausführungsvariante der erfindungsgemäßen Vorrichtung zum Streuen von Granulat in einer horizontalen Anordnung;
- Fig. 3: zeigt ein Schnittbild durch die Vorrichtung zum Streuen von Granulat gemäß Fig. 2 entlang der Schnittlinie III - III;
- Fig. 4: zeigt eine vertikale Anordnung der Vorrichtung zum Streuen von Granulat in einem Behälter für das Granulat;
- Fig. 5: zeigt ein Blockschaltbild zur Veranschaulichung einer Methode zum Betreiben der erfindungsgemäßen Vorrichtung zum Streuen von Granulat;
- Fig. 6: zeigt ein Blockschaltbild zur Veranschaulichung einer alternativen Methode zum Betreiben der erfindungsgemäßen Vorrichtung zum Streuen von Granulat; und
- Fig. 7: zeigt ein schematisches Zeitdiagramm zur Veranschaulichung der Regelung der Druckluftquellen zum Betreiben der Vorrichtung zum Streuen von Granulat.

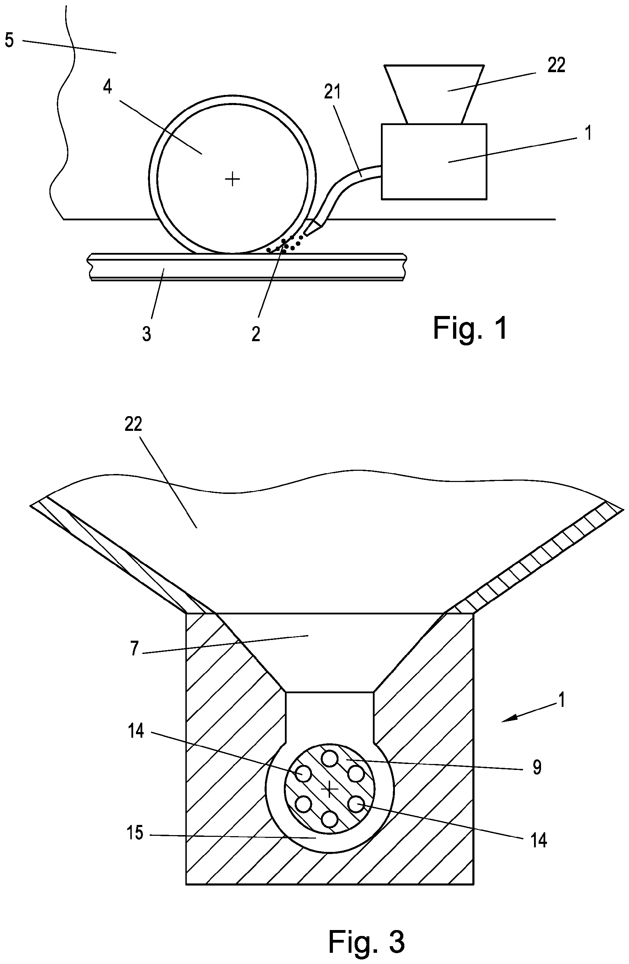

Fig. 1 zeigt eine Pinzipdarstellung einer Vorrichtung 1 zum Streuen von Granulat 2, welches an einem Schienenfahrzeug 5 montiert ist. Die Vorrichtung 1 zum Streuen von Granulat 2 ist unter einem Behälter 22 für das Granulat 2 angeschlossen, und dosiert und fördert eine gewünschte Menge an Granulat 2, über eine Förderleitung 21 in den Spalt zwischen Rad 4 eines Schienenfahrzeugs 5 und Schiene 3, um die Reibung zwischen Schiene 3 und Rad 4 zu erhöhen. Die Steuerung der Vorrichtung 1 zum Streuen des Granulats 2 erfolgt in der Regel manuell oder automatisch.

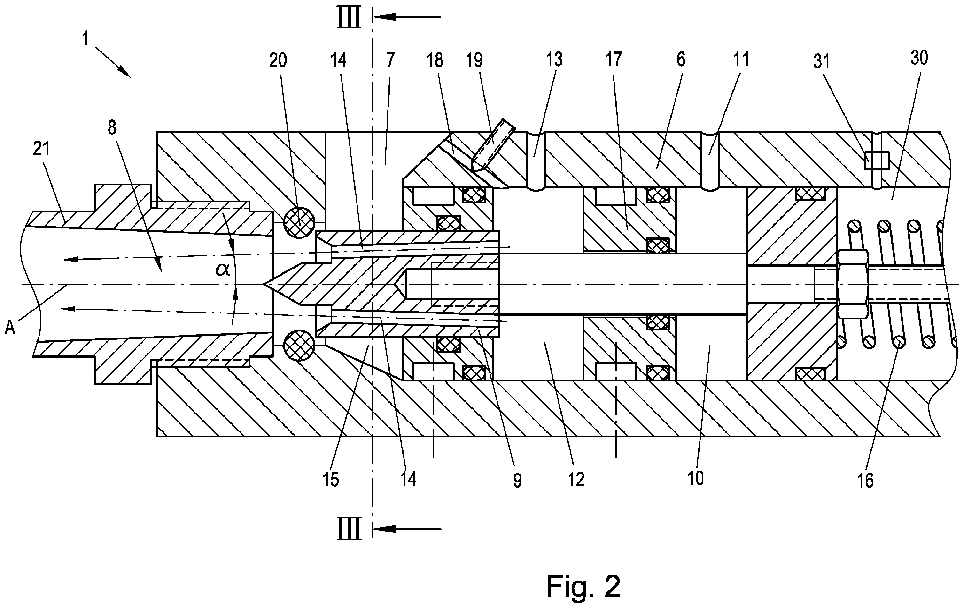

In Fig. 2 ist ein Seitenschnitt durch eine Ausführungsvariante der erfindungsgemäßen Vorrichtung 1 zum Streuen von Granulat 2 in einer horizontalen Anordnung unter einem Behälter 22 für das Granulat 2 dargestellt. Die Vorrichtung 1 beinhaltet ein Gehäuse 6 mit zumindest einem Zulauf 7 für das Granulat 2 und zumindest einem Auslass 8 für das Granulat 2, an dem eine entsprechende Förderleitung 21 angeschlossen ist, welche das dosierte Granulat 2 an die gewünschte Stelle leitet. Zur Dosierung des Granulats 2 befindet sich ein axial beweglicher Dosierkolben 2 innerhalb des Gehäuses 6. Die Bewegung des Dosierkolbens 9 erfolgt über Druckluft, die über einen Druckluftanschluss 11 in die Druckkammer 10 Druckluft eingeblasen werden kann. Wird der Dosierkolben 9 aus der Ausgangslage wegbewegt, wird der Zulauf 7 für das Granulat 2 freigegeben, wodurch eine nach der axialen Verschiebung und Dauer der Verschiebung des Dosierkolbens 9 entsprechende Menge an Granulat 7 vor den Dosierkolben 9 dosiert werden kann. Im dargestellten Ausführungsbeispiel ist der Zulauf 7 für das Granulat 2 mit einer vorzugsweise ringförmigen Granulatkammer 15 verbunden, so dass ein gleichmäßiger kontinuierlicher Zulauf des Granulats 2 möglich ist. Getrennt von der Druckkammer 10 befindet sich eine Förderluftkammer 12 innerhalb des Gehäuses 6 der Vorrichtung 1, in welche Förderluftkammer 12 über einen entsprechenden Druckluftanschluss 13 ebenfalls Druckluft eingebracht werden kann. Über zumindest eine Bohrung 14 im Dosierkolben 9 gelangt die Druckluft der Förderluftkammer 12 zum Ende des Dosierkolbens 9 beim Auslass 8 für das Granulat und dient somit zur Förderung des dosierten Granulats 2 über die Förderleitung 21 zu der gewünschten Stelle, insbesondere dem Spalt zwischen Rad 4 und Schiene 3. Vorzugsweise sind mehrere Bohrungen 14 im Dosierkolben ringförmig angeordnet, um eine ringförmige Verteilung der Druckluft zur Förderung des Granulats 2 zu erzielen. Eine Neigung der Bohrungen 14 gegenüber der Mittelachse A des Dosierkolbens 9, beispielsweise um einen Winkel α zwischen 1° und 5° unterstützt eine Förderung des Granulats 2 mit möglichst geringem Energieaufwand. Der Dosierkolben 9 kann am freien Ende, welches dem Auslass 8 für das Granulat 2 zugewandt ist, zugespitzt ausgebildet sein, was die Dosierung des Granulats 2 erleichter. Auch der Zulauf 7 für das Granulat 2 kann mit einer gewissen Neigung, vorzugsweise 30° bis 60°, versehen sein. Dadurch wird ein kontinuierlicher Zulauf des Granulats 2 von einem Behälter 22 (nicht dargestellt) erreicht. Eine Feder 16 dient vorzugsweise zum automatischen Rückstellen des Dosierkolbens 9 in die Ausgangslage. Die Feder 16 kann durch eine Schraubenfeder gebildet sein, welche in einem dichten Federraum 30 angeordnet ist. Über ein Ventil 31 kann der Federraum 30 bei Bedarf entlüftet werden. Um in der Ausgangslage des Dosierkolbens 9 eine Dichtheit zu gewährleisten und ein ungewolltes Auslaufen von Granulat 2 vom Zulauf 7 zum Auslass 8 zu verhindern, kann eine entsprechende Dichtung 20, insbesondere ein O-Ring aus geeignetem elastischem Material, angeordnet sein. Zur Trennung zwischen Druckkammer 10 und Förderluftkammer 12 kann ein Trennelement 17 mit einer entsprechenden Führung für den Dosierkolben 9 angeordnet sein. Das Trennelement 17 ist ebenso wie das vor der Förderluftkammer 12 angeordnete Element mit entsprechenden Arretierschrauben (nicht dargestellt) am Gehäuse 6 befestigt, was durch die strichpunktierten Linien angedeutet wird. Am Trennelement 17 und ebenso an dem vor der Förderkammer 12 angeordneten Element sind auch entsprechende Führungen und Dichtungen für den axial beweglichen Dosierkolben 9 angeordnet.

Um einen Unterdruck im Zulauf 7 für das Granulat 2 zu verhindern, kann ein Bypass 18 zwischen Förderluftkammer 12 und Zulauf 7 für das Granulat 2 angeordnet sein, über welchen Bypass 18 ein Teil der zur Förderung des Granulats 2 verwendeten Druckluft zum Zulauf 7 des Granulats 2 geführt wird. Über eine Regulierschraube 19 im Bypass 18 kann die Menge der über den Bypass 18 geführten Druckluft eingestellt werden.

Fig. 3 zeigt ein Schnittbild durch die Vorrichtung 1 zum Streuen von Granulat 2 gemäß Fig. 2 entlang der Schnittlinie III - III. Bei dieser Ausführungsvariante ist die Vorrichtung 1 zum Streuen von Granulat 2 im Wesentlichen horizontal unter einem Behälter 22 für das Granulat 2 angeordnet. Aus dem Schnittbild gemäß Fig. 3 ist ersichtlich, dass im Dosierkolben 9 sechs Bohrungen 14 ringförmig im Dosierkolben 9 angeordnet sind. Die ringförmige Granulatkammer 15 ist in dieser Schnittbilddarstellung ebenfalls gut ersichtlich. Die horizontale Anordnung der Vorrichtung 1 eignet sich insbesondere zum Nachrüsten bestehender Schienenfahrzeuge mit beschränktem räumlichen Platzangebot.

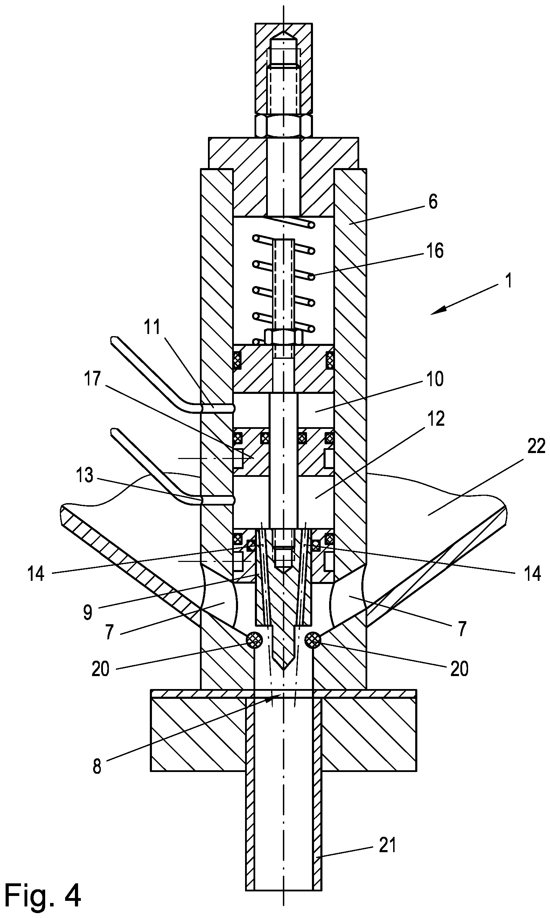

In Fig. 4 ist eine vertikale Anordnung der Vorrichtung 1 zum Streuen von Granulat 2 in einem Behälter 22 für das Granulat 2 dargestellt. Bei dieser Ausführungsvariante, welche gegenüber einer horizontalen Anordnung mehr Bauhöhe in Anspruch nimmt, ist die Vorrichtung 1 zum Streuen des Granulats 2 im Behälter 22 für das Granulat 2 angeordnet. Ansonsten unterscheidet sich die Funktion der Vorrichtung 1 nicht von jener der horizontalen Anordnung gemäß den Figuren 2 und 3.

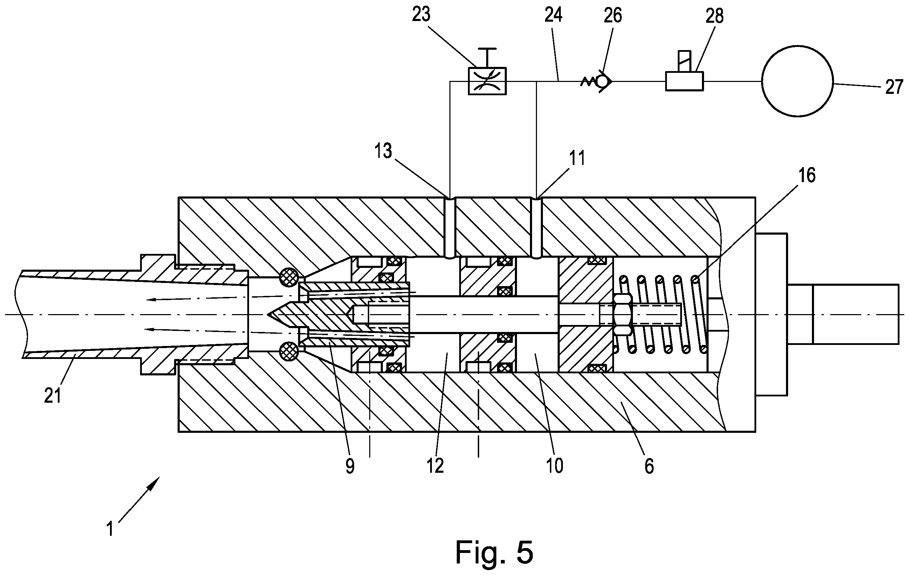

Fig. 5 zeigt ein Blockschaltbild zur Veranschaulichung einer Methode zum Betreiben der erfindungsgemäßen Vorrichtung 1 zum Streuen von Granulat 2. Bei diesem sog. Einleitungssystem ist eine Druckluftquelle 27 über eine gemeinsame Druckluftleitung mit sowohl der Druckkammer 10 bzw. dessen Druckluftanschluss 11 verbunden als auch mit der Förderluftkammer 12 bzw. deren Druckluftanschluss 13. Über einen Druckluftregler 28 und ein Drosselventil 23 kann das gewünschte Niveau der Druckluft für die Bewegung des Dosierkolbens 9 einerseits und die Förderung des Granulats andererseits eingestellt werden. Ein Rückschlagventil 26 in der Druckluftleitung 24 dient dazu, dass der sog. Nachblaseffekt eintritt, bei dem nach Beendigung des Dosier- und Förderverfahrens die in der Druckkammer 10 vorhandene Druckluft nicht in die Druckleitung 24 expandiert, sondern in die Förderluftkammer 12 gelangt und verbleibendes Granulat 2 in der Förderleitung 21 wegtransportiert.

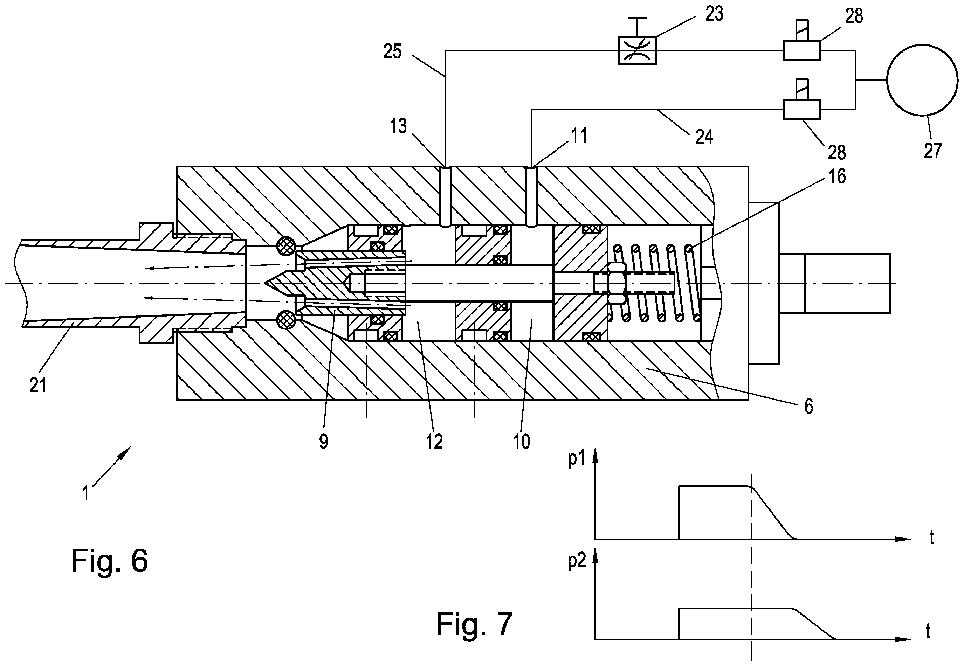

In Fig. 6 ist ein Blockschaltbild zur Veranschaulichung einer alternativen Methode zum Betreiben der erfindungsgemäßen Vorrichtung 1 zum Streuen von Granulat 2 wiedergegeben. Bei der alternativen Methode werden zwei Druckluftleitungen 24, 25 mit den Druckluftanschlüssen 11 für die Druckkammer 10 bzw. 13 für die Förderluftkammer 12 verbunden. Über entsprechende Druckluftregler und ein entsprechendes Drosselventil 23 können die für die Bewegung des Dosierkolbens 9 und die Förderung des Granulats 2 gewünschten Niveaus der Druckluft eingestellt werden. Bei diesem sog. Zweileitungssystem erfolgt die Versorgung der Dosierkammer 10 und die Versorgung der Förderluftkammer 12 über getrennte Druckluftleitungen 24, 25 und die Funktion der Dosierung und Förderung sind unabhängig voneinander separat steuer- und regelbar.

Schließlich zeigt Fig. 7 ein schematisches Zeitdiagramm zur Veranschaulichung der Regelung der Druckluftquellen zum Betreiben der Vorrichtung 1 zum Streuen von Granulat 2. Die Druckluft p1 zur Bewegung des Dosierkolbens wird entsprechend der gewünschten Dosierung des Granulats 2 angesteuert. Nach Abschalten der Druckluft p1 für die Bewegung des Dosierkolbens 9 fällt der Druck p1 in der Druckkammer 10 langsam ab. Die Druckluft p2 zur Förderung des Granulats wird über den Abschaltzeitpunkt des Dosierkolbens 9 hinaus länger aktiviert, um ein sicheres Transportieren des Granulats 2 durch die Förderleitung 21 und ein entsprechendes Freiblasen der Förderleitung 21 zu erzielen.

Die vorliegende Vorrichtung 1 zum Streuen von Granulat 2 zeichnet sich durch weniger Bauteile, eine platzsparende Bauweise, ein geringeres Gewicht sowie geringere Kosten aus, wodurch eine breite Anwendung auch zum Nachrüsten bestehender Schienenfahrzeuge möglich ist. Darüber hinaus zeichnet sich die gegenständliche Streuvorrichtung 1 durch kurze Reaktionszeiten, einen geringen Verschleiß und einen geringen Energiebedarf aus.

## Patentansprüche

1. Vorrichtung (1) zum Streuen von Granulat (2), insbesondere zum Streuen von Sand in den Spalt zwischen Schiene (3) und Rad (4) eines Schienenfahrzeuges (5), mit einem Gehäuse (6), zumindest einem Zulauf (7) für das Granulat (2) und zumindest einem Auslass (8) für das Granulat (2), einem axial bewegbaren Dosierkolben (9) mit zumindest einer Bohrung (14) und einem in einer Druckkammer (10) mündenden Druckluftanschluss (11) zur Betätigung des Dosierkolbens (9) mittels Druckluft zur Dosierung des Granulats (2), wobei eine von der Druckkammer (10) getrennte Förderluftkammer (12) mit einem Druckluftanschluss (13) vorgesehen ist, und die zumindest eine Bohrung (14) im Dosierkolben (9) die Förderluftkammer (12) mit dem zumindest einen Auslass (8) für das Granulat (2) verbindet, sodass das Granulat (2) unabhängig von der Dosierung mittels Druckluft zu dem zumindest einen Auslass (8) förderbar ist, **dadurch gekennzeichnet, dass** im Dosierkolben (9) mehrere Bohrungen (14) angeordnet sind.

2. Vorrichtung (1) nach Anspruch 1, **dadurch gekennzeichnet, dass** die Bohrungen (14) im Dosierkolben (9) ringförmig angeordnet sind.

3. Vorrichtung (1) nach Anspruch 2, **dadurch gekennzeichnet, dass** die Bohrungen (14) zur Mittelachse (A) des Dosierkolbens (9) geneigt angeordnet sind.

4. Vorrichtung (1) nach einem der Ansprüche 1 bis 3, **dadurch gekennzeichnet, dass** um jenem Ende des Dosierkolbens (9), das dem zumindest einen Auslass (8) für das Granulat (2) zugewandt ist, eine mit dem zumindest einen Zulauf (7) für das Granulat (2) verbundene vorzugsweise ringförmige Granulatkammer (15) angeordnet ist.

5. Vorrichtung (1) nach einem der Ansprüche 1 bis 4, **dadurch gekennzeichnet, dass** der zumindest eine Zulauf (7) für das Granulat (2) geneigt, vorzugsweise um 30° bis 60° geneigt, insbesondere um 45° geneigt angeordnet ist.

6. Vorrichtung (1) nach einem der Ansprüche 1 bis 5, **dadurch gekennzeichnet, dass** das Ende des Dosierkolbens (9), das dem zumindest einen Auslass (8) für das Granulat (2) zugewandt ist, zugespitzt ausgebildet ist.

7. Vorrichtung (1) nach einem der Ansprüche 1 bis 6, **dadurch gekennzeichnet, dass** eine Feder (16) zum Rückstellen des Dosierkolbens (9) vorgesehen ist, welche vorzugsweise in einem dichten Federraum (30), vorzugsweise mit einem Ventil (31), angeordnet ist.

8. Vorrichtung (1) nach einem der Ansprüche 1 bis 7, **dadurch gekennzeichnet, dass** die Trennung zwischen Druckkammer (10) und Förderluftkammer (12) durch ein Trennelement (17) mit einer Führung für den Dosierkolben (9) gebildet ist.

9. Vorrichtung (1) nach einem der Ansprüche 1 bis 8, **dadurch gekennzeichnet, dass** zwischen Förderluftkammer (12) und dem zumindest einen Zulauf (7) für das Granulat (2) ein Bypass (18) zur Führung eines Teils der zur Förderung des Granulats (2) verwendeten Druckluft zum Zulauf (7) des Granulats (2) angeordnet ist, wobei im Bypass (18) vorzugsweise eine Regulierschraube (19) vorgesehen ist.

10. Vorrichtung (1) nach einem der Ansprüche 1 bis 9, **dadurch gekennzeichnet, dass** zwischen Dosierkolben (9) und Gehäuse (6) eine Dichtung (20), vorzugsweise ein O-Ring, angeordnet ist.

11. Vorrichtung (1) nach einem der Ansprüche 1 bis 10, **dadurch gekennzeichnet, dass** der zumindest eine Auslass (8) für das Granulat (2) mit einer Förderleitung (21) verbunden ist.

12. Vorrichtung (1) nach einem der Ansprüche 1 bis 11, **dadurch gekennzeichnet, dass** der Dosierkolben (9) im Wesentlichen horizontal angeordnet ist und das Gehäuse (6) von unten an einen Behälter (22) für das Granulat (2) anschließbar ist.

13. Vorrichtung (1) nach einem der Ansprüche 1 bis 11, **dadurch gekennzeichnet, dass** der Dosierkolben (9) im Wesentlichen vertikal angeordnet ist und das Gehäuse (6) in einem Behälter (22) für das Granulat (2) angeordnet ist.

14. Vorrichtung (1) nach einem der Ansprüche 1 bis 13, **dadurch gekennzeichnet, dass** die Druckluftanschlüsse (11, 13) unter Zwischenschaltung eines Drosselventils (23) an einer gemeinsamen Druckluftleitung (24), vorzugsweise mit einem Rückschlagventil (26), angeschlossen sind.

15. Vorrichtung (1) nach einem der Ansprüche 1 bis 13, **dadurch gekennzeichnet, dass** die Druckluftanschlüsse (11, 13) an zwei unterschiedlichen Druckluftleitungen (24, 25) angeschlossen sind.

## Claims

1. Device (1) for spreading granular material (2), in particular for spreading sand into the gap between a rail (3) and a wheel (4) of a rail vehicle (5), comprising a housing (6), at least one inlet (7) for the granular material (2), and at least one outlet (8) for the granular material (2), an axially movable metering piston (9) having at least one bore (14) and a compressed air connection (11) opening into a pressure chamber (10) for actuating the metering piston (9) by means of compressed air for metering the granular material (2), a conveying air chamber (12) which is separate from the pressure chamber (10) being provided with a compressed air connection (13), and the at least one bore (14) in the metering piston (9) connecting the conveying air chamber (12) to the at least one outlet (8) for the granular material (2), such that the granular material (2) can be conveyed to the at least one outlet (8) by means of compressed air independently of the metering process, **characterised in that** a plurality of bores (14) are arranged the metering piston (9).

2. Device (1) according to claim 1, **characterised in that** the bores (14) are arranged annularly in the metering piston (9).

3. Device (1) according to claim 2, **characterised in that** the bores (14) are arranged so as to be inclined towards the central axis (A) of the metering piston (9).

4. Device (1) according to any of claims 1 to 3, **characterised in that** a preferably annular granular material chamber (15), which is connected to the at least one inlet (7) for the granular material (2), is arranged around the end of the metering piston (9) that faces the at least one outlet (8) for the granular material (2).

5. Device (1) according to any of claims 1 to 4, **characterised in that** the at least one inlet (7) for the granular material (2) is arranged so as to be inclined, preferably inclined by 30° to 60°, in particular inclined by 45°.

6. Device (1) according to any of claims 1 to 5, **characterised in that** the end of the metering piston (9) that faces the at least one outlet (8) for the granular material (2) is tapered.

7. Device (1) according to any of claims 1 to 6, **characterised in that** a spring (16) is provided for resetting the metering piston (9), which spring is preferably arranged in a sealed spring chamber (30) which preferably has a valve (31).

8. Device (1) according to any of claims 1 to 7, **characterised in that** the separation between the pressure chamber (10) and the conveying air chamber (12) is formed by a separating element (17) having a guide for the metering piston (9).

9. Device (1) according to any of claims 1 to 8, **characterised in that** a bypass (18) for guiding some of the compressed air used for conveying the granular material (2) to the inlet (7) for the granular material (2) is arranged between the conveying air chamber (12) and the at least one inlet (7) for the granular material (2), a metering screw (19) preferably being provided in the bypass (18).

10. Device (1) according to any of claims 1 to 9, **characterised in that** a seal (20), preferably an O-ring, is arranged between the metering piston (9) and the housing (6).

11. Device (1) according to any of claims 1 to 10, **characterised in that** the at least one outlet (8) for the granular material (2) is connected to a conveying line (21).

12. Device (1) according to any of claims 1 to 11, **characterised in that** the metering piston (9) is arranged substantially horizontally and the housing (6) can be connected to a container (22) for the granular material (2) from below.

13. Device (1) according to any of claims 1 to 11, **characterised in that** the metering piston (9) is arranged substantially vertically and the housing (6) is arranged in a container (22) for the granular material (2).

14. Device (1) according to any of claims 1 to 13, **characterised in that** the compressed air connections (11, 13) are connected to a common compressed air line (24), preferably by means of a check valve (26), with a throttle valve (23) connected therebetween.

15. Device (1) according to any of claims 1 to 13, **characterised in that** the compressed air connections (11, 13) are connected to two different compressed air lines (24, 25).

## Revendications

1. Un dispositif (1) d'épandage de granulés (2), en particulier destiné à l'épandage de sable dans une fente entre un rail (3) et une roue (4) d'un véhicule ferroviaire (5), comprenant un boîtier (6), au moins une entrée (7) pour les granulés (2) et au moins une sortie (8) pour les granulés (2), un piston de dosage (9) mobile axialement comprenant au moins un alésage (14) et un raccord d'air comprimé (11) débouchant dans une chambre de pression (10) afin d'actionner le piston de dosage (9) au moyen d'air comprimé pour le dosage des granulés (2), dans lequel une chambre d'air de transport (12) séparée de la chambre de pression (10) est pourvue d'un raccord d'air comprimé (13), et l'au moins un alésage (14) dans le piston de dosage (9) relie la chambre d'air de transport (12) à l'au moins une sortie (8) pour les granulés (2), de sorte que les granulés (2) peuvent être transportés vers l'au moins une sortie (8) au moyen d'air comprimé indépendamment du dosage, **caractérisé en ce que** plusieurs alésages (14) sont pratiqués dans le piston de dosage (9).

2. Dispositif (1) selon la revendication 1, **caractérisé en ce que** les alésages (14) dans le piston de dosage (9) sont disposés en cercle.

3. Dispositif (1) selon la revendication 2, **caractérisé en ce que** les alésages (14) sont disposés de manière inclinée par rapport à l'axe médian (A) du piston de dosage (9).

4. Dispositif (1) selon l'une des revendications 1 à 3, **caractérisé en ce qu'**une chambre à granulés (15) reliée à l'au moins une entrée (7) pour les granulés (2), et de préférence annulaire,, est disposée autour de l'extrémité du piston de dosage (9) qui est orientée vers l'au moins une sortie (8) pour les granulés (2).

5. Dispositif (1) selon l'une des revendications 1 à 4, **caractérisé en ce que** l'au moins une entrée (7) pour les granulés (2) est disposée de manière inclinée, de préférence avec une inclinaison de 30° à 60°, en particulier avec une inclinaison de 45°.

6. Dispositif (1) selon l'une des revendications 1 à 5, **caractérisé en ce que** l'extrémité du piston de dosage (9) qui est orientée vers l'au moins une sortie (8) pour les granulés (2) forme une pointe.

7. Dispositif (1) selon l'une des revendications 1 à 6, **caractérisé en ce qu'**un ressort (16) est prévu pour le rappel du piston de dosage (9), lequel ressort est de préférence disposé dans une chambre de ressort étanche (30), de préférence pourvue d'une soupape (31).

8. Dispositif (1) selon l'une des revendications 1 à 7, **caractérisé en ce que** la séparation entre la chambre de pression (10) et la chambre d'air de transport (12) est formée par un élément de séparation (17) comprenant une glissière pour le piston de dosage (9).

9. Dispositif (1) selon l'une des revendications 1 à 8, **caractérisé en ce qu'**un canal de dérivation (18) est ménagé entre la chambre d'air de transport (12) et l'au moins une entrée (7) pour les granulés (2) afin de guider une partie de l'air comprimé utilisé pour le transport des granulés (2) vers l'entrée (7) des granulés (2), dans lequel une vis de régulation (19) est de préférence disposée dans le canal de dérivation (18).

10. Dispositif (1) selon l'une des revendications 1 à 9, **caractérisé en ce qu'**un joint (20), de préférence un joint torique, est disposé entre le piston de dosage (9) et le boîtier (6).

11. Dispositif (1) selon l'une des revendications 1 à 10, **caractérisé en ce que** l'au moins une sortie (8) pour les granulés (2) est reliée à un conduit d'acheminement (21).

12. Dispositif (1) selon l'une des revendications 1 à 11, **caractérisé en ce que** le piston de dosage (9) est disposé de manière sensiblement horizontale et le boîtier (6) peut être relié par le bas à un récipient (22) pour les granulés (2).

13. Dispositif (1) selon l'une des revendications 1 à 11, **caractérisé en ce que** le piston de dosage (9) est disposé de manière sensiblement verticale et le boîtier (6) est disposé dans un récipient (22) pour les granulés (2).

14. Dispositif (1) selon l'une des revendications 1 à 13, **caractérisé en ce que** les raccords d'air comprimé (11, 13) sont reliés avec interposition d'une soupape d'étranglement (23) à une conduite d'air comprimé commune (24), de préférence pourvue d'un clapet antiretour (26).

15. Dispositif (1) selon l'une des revendications 1 à 13, **caractérisé en ce que** les raccords d'air comprimé (11, 13) sont reliés à deux conduites d'air comprimé différentes (24, 25).
